# DEMANDE DE BREVET EUROPEEN

(11) **EP 4 699 881 A1**
(43) Date de publication de la demande: **25.02.2026**
(21) Numéro de dépôt: 25187432.7
(22) Date de dépôt: 04.07.2025
(51) Int. Cl.: B60W 30/14, B60W 30/18

(54) **PROCÉDÉ ET DISPOSITIF DE CONTRÔLE D'UNE FONCTION DE BRIDAGE DE VITESSE D'UN VÉHICULE PENDANT UNE MARCHE ARRIÈRE, PRODUIT PROGRAMME D'ORDINATEUR ET VÉHICULE**

(30) Priorité: 21.08.2024 FR 2409017
(71) Demandeur: Stellantis Auto SAS, 78300 Poissy (FR)
(72) Inventeur: DISABLEU, ARNAULD, 95150 TAVERNY (FR); DUBOURG, XAVIER, 95130 FRANCONVILLE (FR); MILHAU, YOHAN, 78630 ORGEVAL (FR); CORNU, JEAN PIERRE, 70000 NOIDANS LES VESOUL (FR)
(74) Mandataire: PSIP

(57) **Abrégé**

Un procédé est implémenté dans un véhicule comprenant des roues, un GMP fournissant du couple pour au moins deux roues motrices, et une fonction de bridage de vitesse propre à empêcher le véhicule de se déplacer en marche arrière à une vitesse ayant une valeur absolue supérieure à la valeur absolue d'un premier seuil choisi. Ce procédé comprend une étape (10-30) dans laquelle, lorsqu'une situation de glissement d'au moins une roue motrice est détectée, on remplace le premier seuil par un deuxième seuil choisi et ayant une valeur absolue supérieure à la valeur absolue du premier seuil.

## Description

### Domaine technique de l'invention

L'invention concerne les véhicules comprenant au moins deux roues motrices et une fonction de bridage de vitesse, et plus précisément le contrôle de cette fonction de bridage de vitesse pendant une marche arrière.

### Etat de la technique

Certains véhicules à roues (généralement de type automobile) comprennent un groupe motopropulseur (ou GMP) propre à fournir du couple pour au moins deux roues motrices d'un train moteur, et une fonction de bridage de vitesse (ou BVV (« Brideur de Vitesse du Véhicule » - fonction sécuritaire)).

Dans certains des véhicules présentés ci-avant, la fonction de bridage de vitesse est agencée de manière à empêcher son véhicule de se déplacer en marche arrière à une vitesse qui a une valeur absolue supérieure à celle d'un seuil choisi. Ce bridage est destiné à permettre au conducteur de contrôler la trajectoire de son véhicule en marche arrière. Par exemple, ce seuil peut être égal à -30 km/h (dans ce cas le véhicule est empêché de rouler en marche arrière à plus de 30 km/h).

Or, un tel bridage peut poser problème dans certaines situations de vie d'un véhicule.

En effet, lorsque le véhicule roule en marche arrière sur un sol recouvert de boue ou de neige, le bridage de la vitesse en marche arrière ne permet généralement pas aux roues motrices d'atteindre une vitesse de rotation suffisante pour évacuer la boue ou la neige coincée dans les sculptures des pneumatiques, et donc le véhicule peut se retrouver immobilisé.

De même, lorsque le véhicule roule en marche arrière sur un sol n'offrant pas la même adhérence à ses roues droite qu'à ses roues gauche, les vitesses des roues motrices droite et gauche d'un même train moteur peuvent être très différentes. Par exemple, lorsque l'adhérence est plus faible sur la roue droite d'un train, le différentiel associé à ce train va envoyer toute l'énergie du GMP vers la roue droite et donc la roue gauche ne va pas ou peu tourner. Or, comme la régulation de vitesse (imposée par le bridage) se fait sur la vitesse moyenne des roues motrices, la vitesse réelle du véhicule reste basse et peut empêcher son déplacement car la roue motrice gauche a une vitesse nulle et la roue motrice droite a une vitesse égale au double de la vitesse de régulation.

L'invention a donc notamment pour but d'améliorer la situation.

### Présentation de l'invention

Elle propose notamment à cet effet un procédé de contrôle destiné à être mis en œuvre dans un véhicule comprenant des roues, un groupe motopropulseur (ou GMP) propre à fournir du couple pour au moins deux roues motrices, et une fonction de bridage de vitesse propre à empêcher le véhicule de se déplacer en marche arrière à une vitesse ayant une valeur absolue supérieure à une valeur absolue d'un premier seuil choisi.

Ce procédé de contrôle se caractérise par le fait qu'il comprend une étape dans laquelle, lorsqu'une situation de glissement d'au moins une roue motrice est détectée, on remplace le premier seuil par un deuxième seuil choisi et ayant une valeur absolue supérieure à la valeur absolue du premier seuil.

Grâce à l'invention, après l'instauration du second seuil les roues motrices peuvent tourner suffisamment vite pour permettre le déplacement du véhicule, et donc ce dernier ne risque plus d'être immobilisé, ce qui est de nature à satisfaire son conducteur et à renforcer la sécurité du véhicule et de ses passagers.

Le procédé de contrôle selon l'invention peut comporter d'autres caractéristiques qui peuvent être prises séparément ou en combinaison, et notamment :
- dans son étape, on peut détecter la situation de glissement en effectuant une action qui est choisie parmi une analyse d'informations envoyées par une fonction de contrôle de trajectoire du véhicule, une comparaison de vitesses de rotation en cours des roues, et des comparaisons de gradients de vitesse des roues à un troisième seuil ;
- dans son étape, on peut remplacer le premier seuil par le deuxième seuil lorsque la situation de glissement est détectée pendant au moins une première durée choisie ;
- dans son étape, on peut remplacer le premier seuil par le deuxième seuil en diminuant de façon progressive **la valeur signée du** premier seuil **(ou en augmentant sa valeur absolue)** jusqu'à atteindre le deuxième seuil ;
- dans son étape, lorsque la situation de glissement n'est plus détectée après le remplacement du premier seuil, on peut continuer d'utiliser le deuxième seuil pendant une seconde durée choisie, et après écoulement de cette seconde durée on peut remplacer le deuxième seuil par le premier seuil ;
- dans son étape, lorsqu'une valeur absolue d'une vitesse en cours du véhicule est supérieure à la valeur absolue du deuxième seuil pendant que l'on utilise ce deuxième seuil, on peut remplacer le deuxième seuil par le premier seuil ;
- en présence de l'une des deux dernières options, dans son étape, on peut remplacer le deuxième seuil par le premier seuil en augmentant de façon progressive **la valeur signée du** deuxième seuil **(ou en augmentant sa valeur absolue)** jusqu'à atteindre le premier seuil.

L'invention propose également un produit programme d'ordinateur comprenant un jeu d'instructions qui, lorsqu'il est exécuté par des moyens de traitement, est propre à mettre en œuvre un procédé de contrôle du type de celui présenté ci-avant, dans un véhicule comprenant des roues, un groupe motopropulseur (ou GMP) propre à fournir du couple pour au moins deux roues motrices, et une fonction de bridage de vitesse propre à empêcher le véhicule de se déplacer en marche arrière à une vitesse ayant une valeur absolue supérieure à une valeur absolue d'un premier seuil choisi, pour contrôler la fonction de bridage de vitesse en présence d'une situation de glissement d'au moins une roue motrice.

L'invention propose également un dispositif de contrôle destiné à équiper un véhicule comprenant des roues, un groupe motopropulseur (ou GMP) propre à fournir du couple pour au moins deux roues motrices, et une fonction de bridage de vitesse propre à empêcher le véhicule de se déplacer en marche arrière à une vitesse ayant une valeur absolue supérieure à une valeur absolue d'un premier seuil choisi.

Ce dispositif de contrôle se caractérise par le fait qu'il comprend au moins un processeur et au moins une mémoire agencés pour effectuer les opérations consistant, lorsqu'une situation de glissement d'au moins une roue motrice est détectée, à déclencher un remplacement du premier seuil par un deuxième seuil choisi et ayant une valeur absolue supérieure à la valeur absolue du premier seuil.

L'invention propose également un véhicule, éventuellement de type automobile, et comprenant :
- des roues (dont au moins deux motrices),
- un groupe motopropulseur (ou GMP) propre à fournir du couple pour au moins deux roues motrices,
- une fonction de bridage de vitesse propre à empêcher le véhicule de se déplacer en marche arrière à une vitesse ayant une valeur absolue supérieure à une valeur absolue d'un premier seuil choisi, et
- un dispositif de contrôle du type de celui présenté ci-avant.

### Brève description des figures

D'autres caractéristiques et avantages de l'invention apparaîtront à l'examen de la description détaillée ci-après, et des dessins annexés, sur lesquels :
[Fig. 1] illustre schématiquement et fonctionnellement un exemple de réalisation d'un véhicule comprenant un dispositif de contrôle selon l'invention, un calculateur contrôlant une fonction de bridage de vitesse, et une chaîne de transmission à GMP purement électrique et associé à un calculateur de supervision,
[Fig. 2] illustre schématiquement et fonctionnellement un exemple de réalisation d'un calculateur de fonction de bridage de vitesse comprenant un exemple de réalisation d'un dispositif de contrôle selon l'invention, et
[Fig. 3] illustre schématiquement un exemple d'algorithme mettant en œuvre un procédé de contrôle selon l'invention.

### Description détaillée de l'invention

L'invention a notamment pour but de proposer un procédé de contrôle, et un dispositif de contrôle DC associé, destinés à permettre le contrôle d'une fonction de bridage de vitesse d'un véhicule V à roues, lorsque ce dernier (V) se déplace (ou roule) en marche arrière.

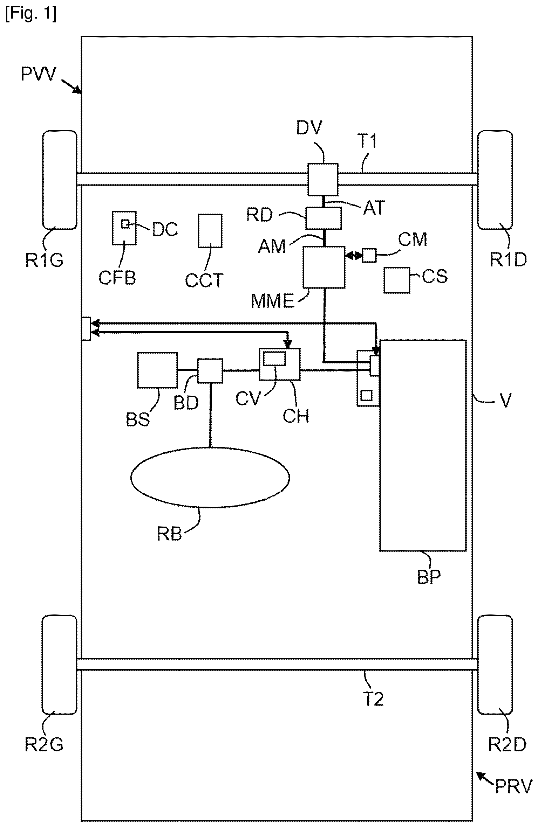

Dans ce qui suit, on considère, à titre d'exemple non limitatif, que le véhicule V est de type automobile. Il s'agit par exemple d'une voiture, comme illustré sur la figure 1. Mais l'invention n'est pas limitée à ce type de véhicule à roues. Elle concerne en effet tout type de véhicule comprenant des roues (dont au moins deux motrices), un groupe motopropulseur (ou GMP) propre à fournir du couple moteur pour au moins un train de roues moteur, et une fonction de bridage de vitesse.

Par ailleurs, on considère dans ce qui suit, à titre d'exemple non limitatif, que le GMP est purement électrique (et donc comprend au moins une machine motrice électrique MME). Mais le GMP pourrait être hybride (par exemple thermique et électrique).

De plus, on considère dans ce qui suit, à titre d'exemple non limitatif, que le GMP électrique comprend une unique machine motrice électrique MME alimentée en énergie électrique par une source d'alimentation électrique BP constituant une batterie de puissance (ou « principale » ou encore « de traction »), rechargeable (au moins pendant des phases de recharge). Mais la (chaque) machine motrice électrique MME pourrait être alimentée en énergie électrique par une pile à combustible (par exemple à hydrogène).

Enfin, on considère dans ce qui suit, à titre d'exemple non limitatif, que la machine motrice électrique MME est associée à un unique train de roues T1 moteur, et donc la chaîne de transmission ne permet qu'un mode deux roues motrices (traction ou propulsion). Mais la chaîne de transmission pourrait comprendre deux trains de roues T1 moteurs afin de permettre un mode quatre roues motrices (ou 4x4).

On a schématiquement représenté sur la figure 1 un véhicule (à roues) V comprenant un dispositif de contrôle DC selon l'invention et une chaîne de transmission à GMP purement électrique (et donc comportant (ici) une unique machine motrice électrique MME), un réseau de bord RB, une batterie de servitude BS, une source d'alimentation électrique (ici une batterie de puissance (ou principale ou encore de traction)) BP, un convertisseur CV, un calculateur de supervision CS, et un calculateur de machine CM.

Le convertisseur CV est de type DC/DC (« Direct Current/Direct Current » (courant continu/courant continu)). Il est donc chargé de convertir un courant continu d'une première tension vers une seconde tension.

Le réseau de bord RB est un réseau d'alimentation électrique auquel sont couplés des équipements (ou organes) électriques (ou électroniques) qui consomment de l'énergie électrique.

La batterie de servitude BS est chargée de fournir de l'énergie électrique au réseau de bord RB, en complément, ici, de celle fournie par le convertisseur CV alimenté par la source d'alimentation électrique BP via un réseau électrique de puissance, et parfois à la place, ici, de ce convertisseur CV. Par exemple, cette batterie de servitude BS peut être agencée sous la forme d'une batterie de type très basse tension (typiquement 12 V, 24 V ou 48 V). Elle est rechargeable au moins par le convertisseur (de courant) CV. On considère dans ce qui suit, à titre d'exemple non limitatif, que la batterie de servitude BS est de type Lithium-ion 12 V.

La chaîne de transmission a un GMP qui est, ici, purement électrique et donc qui comprend, notamment, une machine motrice électrique MME, un arbre moteur AM, et un arbre de transmission AT.

On entend ici par « machine motrice électrique » une machine électrique agencée de manière à fournir un couple moteur, défini par une consigne de couple, pour déplacer le véhicule V lorsqu'elle est alimentée en énergie électrique (ici) par la source d'alimentation électrique BP (on parle alors de fourniture d'un couple de sortie positif), ainsi qu'éventuellement à récupérer du couple de freinage récupératif pour décélérer le véhicule V (on parle alors de fourniture d'un couple de sortie négatif).

Le fonctionnement du GMP est supervisé par un calculateur de supervision CS. Le contrôle de la machine motrice électrique MME est assuré par le calculateur de machine CM, notamment en fonction d'une consigne fournie par le calculateur de supervision CS et définissant le couple moteur que ce dernier (CS) veut que la machine motrice électrique fournisse. On notera que le calculateur de machine CM et le calculateur de supervision CS communiquent entre eux, par exemple via un réseau de communication du véhicule V, éventuellement multiplexé.

La machine motrice électrique MME est couplée à l'arbre moteur AM, pour lui fournir un couple moteur par entraînement en rotation lorsqu'il est (ici) alimenté en énergie électrique par la source d'alimentation électrique BP via le réseau électrique de puissance. Cet arbre moteur AM est ici couplé à un réducteur RD qui est aussi couplé à l'arbre de transmission AT, lui-même couplé à un premier train T1 de roues. Ici, le premier train T1 est associé à la machine motrice électrique MME et donc comprend des roues motrices droite R1D et gauche R1G, et il est de préférence couplé à l'arbre de transmission AT via un différentiel DV.

On notera que le premier train T1 (ici moteur) est, ici, situé dans la partie avant PVV du véhicule V, et est donc ci-après appelé train avant. Mais dans une variante ce premier train T1 pourrait être le second train T2 qui est situé dans la partie arrière PRV du véhicule V.

Ici, le second train T2 (arrière) n'est pas associé à une machine motrice et donc n'est pas moteur. Il comprend des roues **non** motrices droite R2D et gauche R2G.

La source d'alimentation électrique BP est ici une batterie de puissance (ou principale ou encore de traction) qui peut, par exemple, comprendre des cellules de stockage d'énergie électrique, éventuellement électrochimiques (par exemple de type lithium-ion (ou Li-ion) ou Ni-Mh ou Ni-Cd). Egalement par exemple, la source d'alimentation électrique BP peut être de type basse tension (typiquement 450 V ou 600 V à titre illustratif). Mais elle pourrait être de type moyenne tension ou haute tension.

Le convertisseur CV est aussi chargé, ici, pendant les phases de roulage du véhicule V de convertir une partie du courant électrique stocké dans la source d'alimentation électrique BP pour alimenter en courant électrique converti le réseau de bord RB et la batterie de servitude BS (pour la recharger).

On notera, comme illustré non limitativement sur la figure 1, que le convertisseur CV peut faire partie d'un chargeur CH chargé de contrôler les recharges de la source d'alimentation électrique BP.

On notera également que dans l'exemple illustré non limitativement sur la figure 1 le véhicule V comprend aussi un boîtier de distribution BD auquel sont couplés la batterie de servitude BS, le convertisseur CV et le réseau de bord RB. Ce boîtier de distribution BD est chargé de distribuer dans le réseau de bord RB l'énergie électrique stockée dans la batterie de servitude BS ou produite par le convertisseur CV, pour l'alimentation des organes (ou équipements) électriques couplés au réseau de bord RB en fonction de demandes d'alimentation reçues (notamment du calculateur de supervision CS du GMP).

Le véhicule V comprend aussi une fonction sécuritaire de bridage de vitesse (ou BVV) agencée de manière à l'empêcher de se déplacer (ou rouler) en marche arrière à une vitesse qui a une valeur absolue supérieure à **la** valeur absolue d'un premier seuil s1 choisi, et pouvant être remplacé par un deuxième seuil s2 comme on le verra plus loin.

Par exemple, et comme illustré non limitativement sur la figure 1, cette fonction de bridage de vitesse peut être contrôlée par un calculateur CFB dédié. Mais cette fonction de bridage de vitesse pourrait être contrôlée par un autre calculateur embarqué dans le véhicule V, comme par exemple le calculateur de supervision CS ou un calculateur assurant au moins une fonction d'aide à la conduite (ou ADAS (« Advanced Driver Assistance System »)).

Egalement par exemple, et comme illustré non limitativement sur la figure 1, le véhicule V peut aussi comprendre une fonction de contrôle de trajectoire (de type ADAS), par exemple de type ESP (« Electronic Stability Program ») ou ESC (« Electronic Stability Control »). Cette fonction de contrôle de trajectoire est chargée de contrôler la trajectoire du véhicule V en agissant sur son système de freinage ainsi qu'éventuellement sur la puissance motrice fournie par le GMP. Par ailleurs, cette fonction de contrôle de trajectoire est contrôlée par un calculateur CCT dédié.

Comme évoqué plus haut, l'invention propose notamment un procédé de contrôle destiné à permettre le contrôle de la fonction de bridage de vitesse lorsque le véhicule V se déplace (ou roule) en marche arrière.

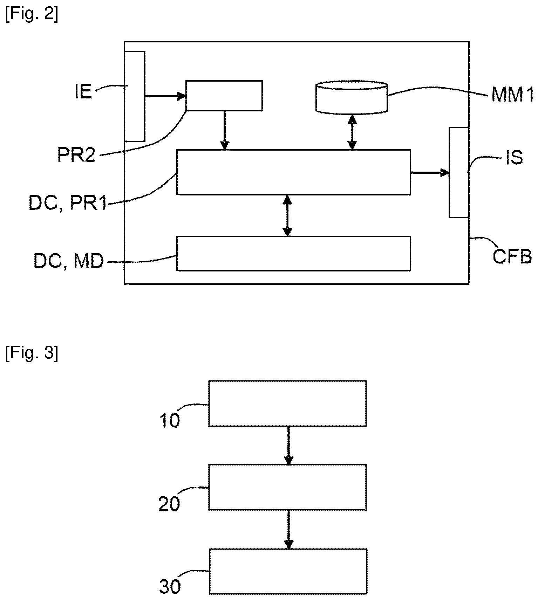

Ce procédé (de contrôle) peut être mis en œuvre au moins partiellement par le dispositif de contrôle DC (illustré au moins partiellement sur les figures 1 et 2) qui comprend à cet effet au moins un processeur PR1, par exemple de signal numérique (ou DSP (« Digital Signal Processor »)), et au moins une mémoire MD. Ce dispositif de contrôle DC peut donc être réalisé sous la forme d'une combinaison de circuits ou composants électriques ou électroniques (ou « hardware ») et de modules logiciels (ou « software »). A titre d'exemple, il peut s'agir d'un microcontrôleur.

La mémoire MD est vive afin de stocker des instructions pour la mise en œuvre par le processeur PR1 d'une partie au moins du procédé de contrôle. Le processeur PR1 peut comprendre des circuits intégrés (ou imprimés), ou bien plusieurs circuits intégrés (ou imprimés) reliés par des connexions filaires ou non filaires. On entend par circuit intégré (ou imprimé) tout type de dispositif apte à effectuer au moins une opération électrique ou électronique.

Dans l'exemple illustré non limitativement sur les figures 1 et 2, le dispositif de contrôle DC fait partie du calculateur de la fonction de bridage CFB. Mais cela n'est pas obligatoire. En effet, le dispositif de contrôle DC pourrait comprendre son propre calculateur dédié, ou bien pourrait faire partie d'un autre calculateur embarqué dans le véhicule V et assurant au moins une autre fonction, comme par exemple le calculateur de supervision CS.

Comme illustré non limitativement sur la figure 3, le procédé (de contrôle), selon l'invention, comprend une étape 10-30 qui est mise en œuvre chaque fois que le véhicule circule (ou se déplace) en marche arrière.

L'étape 10-30 du procédé comprend une sous-étape 20 dans laquelle, lorsqu'une situation de glissement d'au moins une roue T1 motrice est détectée, on remplace le (par exemple le dispositif de contrôle DC déclenche un remplacement du) premier seuil s1 par un deuxième seuil s2 choisi et ayant une valeur absolue supérieure à la valeur absolue du premier seuil s1.

Il est important de noter que les premier s1 et deuxième s2 seuils ont des valeurs négatives du fait **qu'ils** correspondent à des vitesses en marche arrière. Par conséquent, la valeur absolue |s2| du deuxième seuil s2 est supérieure à la valeur absolue |s1| du premier seuil s1, mais le deuxième seuil s2 est inférieur au premier seuil s1 (soit, s1 > s2, mais |s1| < |s2|).

Ainsi, grâce à ce remplacement temporaire du premier seuil s1 par le deuxième seuil s2 les roues motrices (ici R1D et R1G) peuvent tourner suffisamment vite pour permettre le déplacement du véhicule V. Notamment, elles peuvent tourner suffisamment vite pour évacuer de la boue ou de la neige coincée dans les sculptures de leurs pneumatiques de manière à retrouver de l'adhérence. En d'autres termes, le véhicule V ne risque plus d'être immobilisé, ce qui est de nature à satisfaire son conducteur et à renforcer la sécurité du véhicule et de ses passagers.

Par exemple, le premier seuil s1 peut être compris entre -20 km/h et -40 km/h. A titre d'exemple illustratif, le premier seuil s1 peut être égal à -30 km/h. Mais d'autres valeurs de premier seuil s1 peuvent être utilisées. Par exemple, ce premier seuil s1 peut être choisi pendant la phase de mise au point ou d'essai d'un véhicule similaire au véhicule V.

Egalement par exemple, le deuxième seuil s2 peut être compris entre -50 km/h et -70 km/h. A titre d'exemple illustratif, le deuxième seuil s2 peut être égal à -60 km/h. Mais d'autres valeurs de deuxième seuil s2 peuvent être utilisées. Par exemple, ce deuxième seuil s2 peut être choisi pendant la phase de mise au point ou d'essai d'un véhicule similaire au véhicule V.

Egalement par exemple, l'étape 10-30 du procédé peut aussi comprendre une sous-étape 10 dans laquelle on (par exemple le dispositif de contrôle DC) peut détecter la situation de glissement en effectuant une action choisie parmi :
- une analyse d'informations envoyées par la fonction de contrôle de trajectoire du véhicule V, et plus précisément ici par le calculateur CCT,
- une comparaison de vitesses de rotation en cours des roues R1D, R1G, R2D et R2G du véhicule V (ici motrices et non motrices), et
- des comparaisons des gradients de vitesse des roues R1D, R1G, R2D et R2G à un troisième seuil.

Egalement par exemple, l'analyse d'informations peut être destinée à déterminer celles qui sont représentatives d'une régulation en cours effectuée par le calculateur de contrôle de trajectoire CCT, et donc qui indiquent qu'une situation de glissement a été détectée et est en cours de traitement.

On comprendra qu'en comparant les vitesses de rotation en cours des roues R1D, R1G, R2D et R2G il est possible de savoir si l'une d'entre elles à une vitesse notablement **supérieure** à celles des autres roues et donc caractéristique d'un glissement en cours.

On comprendra également que si le gradient de vitesse d'une roue est supérieur à un troisième seuil, cela est caractéristique d'un glissement en cours de cette roue.

Par ailleurs, on notera que la liste mentionnée ci-avant de trois possibilités de détection d'une situation de glissement n'est ni limitative, ni exhaustive.

Egalement par exemple, dans la sous-étape 20 de l'étape 10-30 on (par exemple le dispositif de contrôle DC) peut remplacer le premier seuil s1 par le deuxième seuil s2 lorsque la situation de glissement est détectée pendant au moins une première durée d1 choisie. Cette option est destinée à éviter de remplacer le premier seuil s1 par le deuxième seuil s2 alors que la situation de glissement est très courte ou du fait qu'une valeur d'un paramètre utilisé lors de la détection est anormale pendant une durée très courte. En d'autres termes, cette option permet de confirmer un réel glissement d'une roue.

Egalement par exemple, la première durée d1 peut être comprise entre 300 ms et 800 ms. A titre d'exemple illustratif, la première durée d1 peut être égale à 500 ms. Mais d'autres valeurs de première durée d1 peuvent être utilisées. Par exemple, cette première durée d1 peut être choisie pendant la phase de mise au point ou d'essai d'un véhicule similaire au véhicule V.

Egalement par exemple, dans la sous-étape 20 de l'étape 10-30 on (par exemple le dispositif de contrôle DC) peut remplacer le premier seuil s1 par le deuxième seuil s2 en diminuant de façon progressive le premier seuil s1 jusqu'à atteindre le deuxième seuil s2 (ou en augmentant la valeur absolue du premier seuil s1 jusqu'à atteindre la valeur absolue du deuxième seuil s2). A titre d'exemple illustratif cette diminution (ou augmentation de valeur absolue) peut être linéaire. Cette option est destinée à éviter un changement brutal de comportement du véhicule V. Par exemple, en cas de glissement soudain d'une roue, il ne faut pas permettre une augmentation trop soudaine de la vitesse de rotation des roues pour ne pas surprendre le conducteur.

On notera également que l'étape 10-30 peut comprendre, comme illustré non limitativement sur la figure 3, une sous-étape 30 dans laquelle, lorsque la situation de glissement n'est plus détectée après le remplacement du premier seuil s1, on (par exemple le dispositif de contrôle DC) peut continuer d'utiliser le deuxième seuil s2 pendant une seconde durée d2 choisie, et après écoulement de cette seconde durée d2 on (par exemple le dispositif de contrôle DC) peut remplacer le deuxième seuil s2 par le premier seuil s1. Cette option est destinée à éviter de revenir à la situation initiale (avec le premier seuil s1) alors qu'une nouvelle situation de glissement réapparait rapidement après la fin de détection de la situation de glissement précédente.

Egalement par exemple, la seconde durée d2 peut être comprise entre 500 ms et 2 s. A titre d'exemple illustratif, la seconde durée d2 peut être égale à 1 s. Mais d'autres valeurs de seconde durée d2 peuvent être utilisées. Par exemple, cette seconde durée d2 peut être choisie pendant la phase de mise au point ou d'essai d'un véhicule similaire au véhicule V.

Egalement par exemple, dans la sous-étape 20 de l'étape 10-30, lorsque la valeur absolue de la vitesse en cours du véhicule V est supérieure à la valeur absolue du deuxième seuil s2 pendant que l'on utilise ce deuxième seuil s2, on (par exemple le dispositif de contrôle DC) peut remplacer le deuxième seuil s2 par le premier seuil s1. On comprendra en effet qu'il ne faut plus utiliser le deuxième seuil s2 pour le bridage du véhicule V lorsque la vitesse en cours de ce dernier (V) en marche arrière devient trop importante. Par ailleurs, on notera que la vitesse en cours du véhicule V peut être déterminée par toute technique connue de l'homme de l'art, et notamment par des mesures sur les roues non motrices (ici R2D et R2G).

Egalement par exemple, dans la sous-étape 20 ou 30 de l'étape 10-30 on (par exemple le dispositif de contrôle DC) peut remplacer le deuxième seuil s2 par le premier seuil s1 en augmentant de façon progressive le deuxième seuil s2 jusqu'à atteindre le premier seuil s1 (ou en diminuant la valeur absolue du deuxième seuil s2 jusqu'à atteindre la valeur absolue du premier seuil s1). A titre d'exemple illustratif cette augmentation (ou diminution de valeur absolue) peut être linéaire. Cette option est destinée à éviter un changement brutal de comportement du véhicule V. Par exemple, lors du retour du véhicule V sur une surface ayant une meilleure adhérence, il ne faut pas ralentir trop vite les roues motrices (ici R1D et R1G) pour ne pas surprendre le conducteur, ni risquer de provoquer un glissement des roues.

On notera également, comme illustré non limitativement sur la figure 2, que le calculateur de la fonction de bridage CFB (ou le calculateur du dispositif de contrôle DC) peut aussi comprendre une mémoire de masse MM1, notamment pour stocker au moins les informations représentatives d'une situation de glissement, les informations représentatives d'une fin de situation de glissement, et l'éventuelle vitesse en cours du véhicule V, ainsi que d'éventuelles données intermédiaires intervenant dans tous ses calculs et traitements. Par ailleurs, ce calculateur de la fonction de bridage CFB (ou le calculateur du dispositif de contrôle DC) peut aussi comprendre une interface d'entrée IE pour recevoir au moins les informations représentatives d'une situation de glissement, les informations représentatives d'une fin de situation de glissement, et l'éventuelle vitesse en cours du véhicule V, pour les utiliser dans des calculs ou traitements, éventuellement après les avoir mises en forme et/ou démodulées et/ou amplifiées, de façon connue en soi, au moyen d'un processeur de signal numérique PR2. De plus, ce calculateur de la fonction de bridage CFB (ou le calculateur du dispositif de contrôle DC) peut aussi comprendre une interface de sortie IS, notamment pour délivrer chaque message (ou ordre) de remplacement du premier seuil s1 par le deuxième seuil s2 (ou un seuil d'une valeur intermédiaire entre s1 et s2), chaque message (ou ordre) de remplacement du deuxième seuil s2 par le premier seuil s1 (ou un seuil d'une valeur intermédiaire entre s2 et s1).

On notera également que l'invention propose aussi un produit programme d'ordinateur (ou programme informatique) comprenant un jeu d'instructions qui, lorsqu'il est exécuté par des moyens de traitement de type circuits électroniques (ou hardware), comme par exemple le processeur PR1, est propre à mettre en œuvre le procédé de contrôle décrit ci-avant pour contrôler la fonction de bridage en présence d'une situation de glissement d'au moins une roue T1 motrice du véhicule V.

## Revendications

1. Procédé de contrôle pour un véhicule (V) comprenant i) des roues, ii) un groupe motopropulseur propre à fournir du couple pour au moins deux roues (T1) motrices, et iii) une fonction de bridage de vitesse propre à empêcher ledit véhicule (V) de se déplacer en marche arrière à une vitesse ayant une valeur absolue supérieure à une valeur absolue d'un premier seuil choisi, **caractérisé en ce qu'**il comprend une étape (10-30) dans laquelle, lorsqu'une situation de glissement d'au moins une roue (T1) motrice est détectée, on remplace ledit premier seuil par un deuxième seuil choisi et ayant une valeur absolue supérieure à ladite valeur absolue dudit premier seuil.

2. Procédé selon la revendication 1, **caractérisé en ce que** dans ladite étape (10-30) on détecte ladite situation de glissement en effectuant une action choisie parmi une analyse d'informations envoyées par une fonction de contrôle de trajectoire dudit véhicule (V), une comparaison de vitesses de rotation en cours desdites roues, et des comparaisons de gradients de vitesse desdites roues à un seuil.

3. Procédé selon la revendication 1 ou 2, **caractérisé en ce que** dans ladite étape (10-30) on remplace ledit premier seuil par ledit deuxième seuil lorsque ladite situation de glissement est détectée pendant au moins une première durée choisie.

4. Procédé selon l'une des revendications 1 à 3, **caractérisé en ce que** dans ladite étape (10-30) on remplace ledit premier seuil par ledit deuxième seuil en diminuant de façon progressive ledit premier seuil jusqu'à atteindre ledit deuxième seuil.

5. Procédé selon l'une des revendications 1 à 4, **caractérisé en ce que** dans ladite étape (10-30), lorsque ladite situation de glissement n'est plus détectée après le remplacement dudit premier seuil, on continue d'utiliser ledit deuxième seuil pendant une seconde durée choisie, et après écoulement de ladite seconde durée on remplace ledit deuxième seuil par ledit premier seuil.

6. Procédé selon l'une des revendications 1 à 4, **caractérisé en ce que** dans ladite étape (10-30), lorsqu'une valeur absolue d'une vitesse en cours dudit véhicule (V) est supérieure à la valeur absolue dudit deuxième seuil pendant que l'on utilise ledit deuxième seuil, on remplace ledit deuxième seuil par ledit premier seuil.

7. Procédé selon la revendication 5 ou 6, **caractérisé en ce que** dans ladite étape (10-30) on remplace ledit deuxième seuil par ledit premier seuil en augmentant de façon progressive ledit deuxième seuil jusqu'à atteindre ledit premier seuil.

8. Produit programme d'ordinateur comprenant un jeu d'instructions qui, lorsqu'il est exécuté par des moyens de traitement, est propre à mettre en œuvre le procédé de contrôle selon l'une des revendications 1 à 7, dans un véhicule (V) comprenant i) des roues, ii) un groupe motopropulseur propre à fournir du couple pour au moins deux roues (T1) motrices, et iii) une fonction de bridage de vitesse propre à empêcher ledit véhicule (V) à se déplacer en marche arrière à une vitesse ayant une valeur absolue supérieure à une valeur absolue d'un premier seuil choisi, pour contrôler ladite fonction de bridage de vitesse en présence d'une situation de glissement d'au moins une roue (T1) motrice.

9. Dispositif de contrôle (DC) pour un véhicule (V) comprenant i) des roues, ii) un groupe motopropulseur propre à fournir du couple pour au moins deux roues (T1) motrices, et iii) une fonction de bridage de vitesse propre à empêcher ledit véhicule (V) de se déplacer en marche arrière à une vitesse ayant une valeur absolue supérieure à une valeur absolue d'un premier seuil choisi, **caractérisé en ce qu'**il comprend au moins un processeur (PR1) et au moins une mémoire (MD) agencés pour effectuer les opérations consistant, lorsqu'une situation de glissement d'au moins une roue (T1) motrice est détectée, à déclencher un remplacement dudit premier seuil par un deuxième seuil choisi et ayant une valeur absolue supérieure à ladite valeur absolue du premier seuil.

10. Véhicule (V) comprenant i) des roues, ii) un groupe motopropulseur propre à fournir du couple pour au moins deux roues (T1) motrices, et iii) une fonction de bridage de vitesse propre à empêcher ledit véhicule (V) de se déplacer en marche arrière à une vitesse ayant une valeur absolue supérieure à une valeur absolue d'un premier seuil choisi, **caractérisé en ce qu'**il comprend en outre un dispositif de contrôle (DC) selon la revendication 9.
